# DEMANDE DE BREVET EUROPEEN

(11) **EP 1 084 931 A2**
(43) Date de publication de la demande: **21.03.2001**
(21) Numéro de dépôt: 00810724.5
(22) Date de dépôt: 15.08.2000
(51) Int. Cl.: B62B 5/04

(54) **Dispositif porteur et chariot à roues libres comportant un tel dispositif**

(30) Priorité: 16.09.1999 CH 169899
(71) Demandeur: Lanza, Giovanni, 1844 Villeneuve (CH)
(72) Inventeur: Lanza, Giovanni, 1844 Villeneuve (CH)
(74) Mandataire: Ganguillet, Cyril

(57) **Abrégé**

Les moyens de pivotement (5) des fourches d'essieu dans lesquelles pivotent les roues (7) sont fixés sous le cadre (1) au droit des extrémités de l'ouverture (2). Les tiges de freinage (15) à tête conique (17) sont mobiles verticalement dans l'axe des moyens de pivotement (5). Elles sont commandées par les culbuteurs (12), pivotant sur les goupilles fixes (13), sollicités en permanence par les extrémités du ressort à gaz (14). La désactivation des freins se commande au moyen de la barre de transmission (11) par le mécanisme à levier (8) solidaire de l'axe (9) et de la biellette (10). Quand les fourches d'essieu sont orientées perpendiculairement au dessin, les ouvertures (26) dans les épaulements des fourches d'essieu se trouvent en regard des extrémités de deux tiges de blocage (18) qui peuvent être manoeuvrées au moyen de la commande de blocage (25, 24, 23, 20).

## Description

La présente invention a pour objet un dispositif porteur pour chariot à roues libres ayant au moins une paire de roues montées dans des fourches d'essieu orientables.

Pour certaines applications, il est nécessaire de réaliser des chariots à roues libres ne comportant aucun organe moteur propre, qui puissent être manoeuvrés et dirigés facilement soit à la main soit au moyen de treuils. C'est le cas par exemple pour des cellules d'assistance pour incendie, d'assistance médicale ou d'assistance à la protection civile, qui doivent premièrement être transportées par un véhicule et déchargées sur le lieu d'assistance, puis pouvoir être déplacées sur le terrain.

Il faut par conséquent que la manipulation de ces chariots se fasse facilement et en toute sécurité, de façon à éviter en particulier que le chariot ne tombe sur le côté de la rampe lors de son chargement ou déchargement du véhicule, et qu'il ne se déplace pas de façon incontrôlée, notamment lorsque le terrain de travail est en pente.

Le but de l'invention est de proposer une construction répondant à cette nécessité, facilement réalisable, peu coûteuse, offrant une manoeuvre de toute sécurité.

Dans ce but, l'invention a pour objet un dispositif porteur pour chariot à roues libres ayant au moins une paire de roues montées dans des fourches d'essieu orientables, caractérisé en ce qu'il comporte un cadre fixe et, sur ce cadre, des dispositifs de pivotement des fourches d'essieu, une commande de freinage des roues et une commande de blocage de l'orientation des fourches d'essieu, les deux commandes étant manoeuvrables séparément.

Selon un mode d'exécution préférentiel de la commande de freinage, chaque fourche d'essieu orientable est équipée d'une tige de freinage agissant dans l'axe de pivotement de la fourche, l'ensemble étant agencé pour appuyer en permanence verticalement les deux tiges de freinage associées aux roues de la dite paire contre la surface de roulement de chacune des roues, la manoeuvre d'un levier étant nécessaire pour désactiver le freinage.

La commande de freinage peut comporter deux culbuteurs triangulaires, pivotant sur le cadre et actionnant chacun une des tiges de freinage, une transmission à tringle, biellette et axe de pivotement, entre le dit levier et les culbuteurs, et un organe à accumulation d'énergie, comme par exemple un ressort à gaz, disposé entre les culbuteurs, actionnant les tiges de freinage contre la surface de roulement des roues, en position de freinage.

Selon un mode d'exécution préférentiel, la commande de blocage des fourches comporte deux tiges de blocage sollicitées par des ressorts, montées sur le même cadre que la commande de freinage et capables de s'engager dans des ouvertures prévues sur des épaulements des fourches, une tringle de liaison guidée par les tiges de blocage et le cadre, et un ensemble à levier, axe de pivotement et biellettes relié à la dite tringle, pour soulever la tringle et entraîner les tiges afin de libérer les fourches, dans une position du levier, et laisser les tiges pénétrer dans les dites ouvertures et ramener la tringle contre le cadre, dans l'autre position du levier.

L'ensemble peut être agencé de façon que les tiges de blocage traversent des ouvertures allongées ménagées dans la tringle et agencées de manière que dans la position de libération des fourches, les tiges soient maintenues en position dégagée contre la force de leurs ressorts, le levier de la commande de blocage des fourches pouvant être un levier à pied.

L'invention a également pour objet un chariot à roues libres comprenant au moins un dispositif porteur avec une paire de roues montées dans des fourches d'essieu orientables, et dans lequel le dispositif porteur est équipé en outre d'une commande de freinage agissant sur des tiges de freinage intégrées aux moyens de pivotement à axe vertical des fourches orientables. Elle concerne aussi un chariot à roues libres comprenant au moins un dispositif porteur avec une paire de roues montées dans des fourches d'essieu orientables, caractérisé en ce que le dispositif porteur est équipé en outre d'une commande de blocage capable de bloquer les fourches d'essieu dans des orientations parallèles et déterminées.

A titre d'exemple de mise en oeuvre de l'invention on va décrire ci-après une forme d'exécution du dispositif porteur d'un chariot à quatre roues dont deux sont orientables. On se réfère pour cela au dessin annexé dont:
la fig. 1 est une vue en plan de dessus du dispositif porteur,
la fig. 2 une vue en élévation partielle montrant le cadre et les leviers de commande du dispositif porteur,
la fig. 3 une vue en coupe selon la ligne A - A de la fig. 1 montrant la commande de freinage en position libre,
la fig. 4 une vue en coupe analogue à la fig. 3 montrant la commande de freinage en position de freinage,
la fig. 5 une vue en coupe selon la ligne B - B de la fig. 1 montrant la commande de blocage des fourches d'essieu en position libre, et
la fig. 6 une vue analogue à la fig. 5 montrant la commande de blocage des fourches d'essieu en position de blocage.

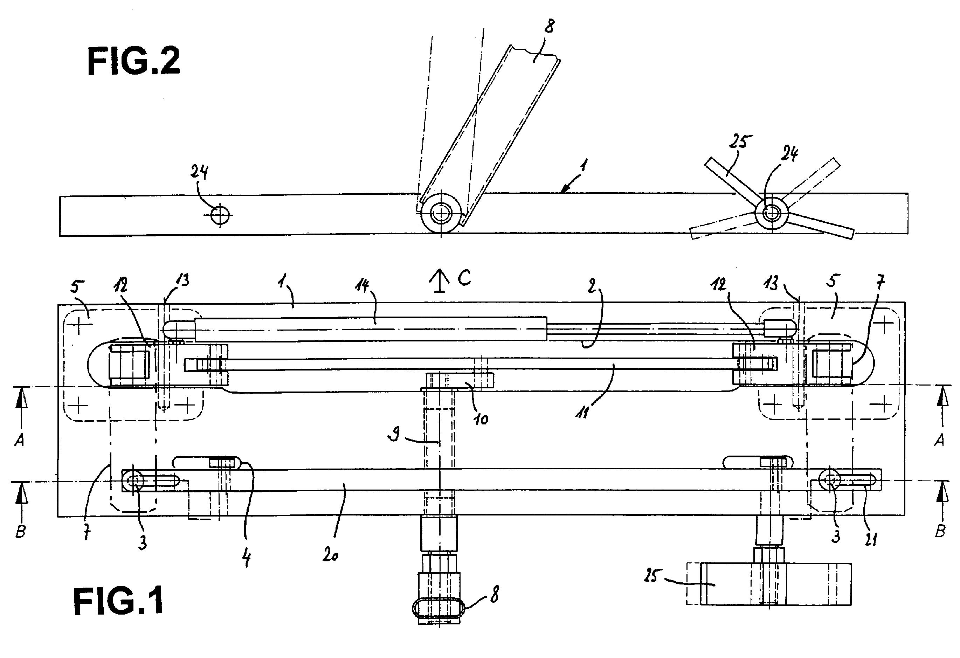

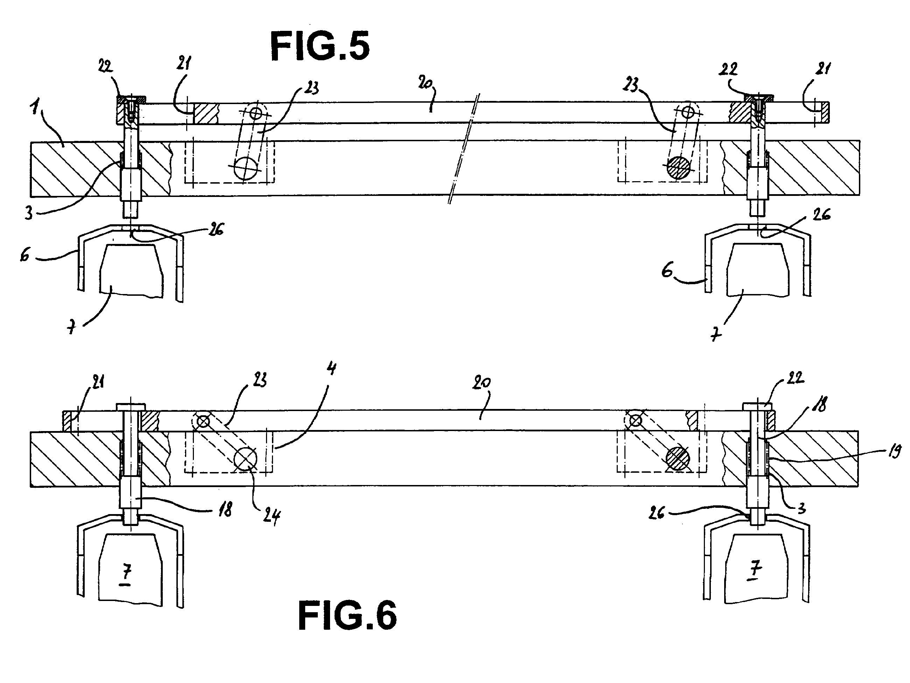

Le dispositif porteur comporte essentiellement, comme élément d'armature un cadre 1 de forme rectangulaire en plan, dont la structure ne sera pas détaillée ici. Ce cadre est destiné à être incorporé au châssis du chariot, lequel ne joue aucun rôle dans la construction décrite. Comme représenté à la fig. 1, le cadre 1 présente différentes ouvertures 2, 3 et 4 pour le montage des organes de commande de freinage et de blocage de l'orientation des roues. L'ouverture 2 s'étend sur la plus grande partie du cadre 1 et loge les éléments de la commande de freinage. Les ouvertures 3 sont des forures cylindriques à épaulement interne. On y reviendra à propos de la fig. 5. Les ouvertures 4 sont des creusures servant à loger certaines parties de la commande de blocage.

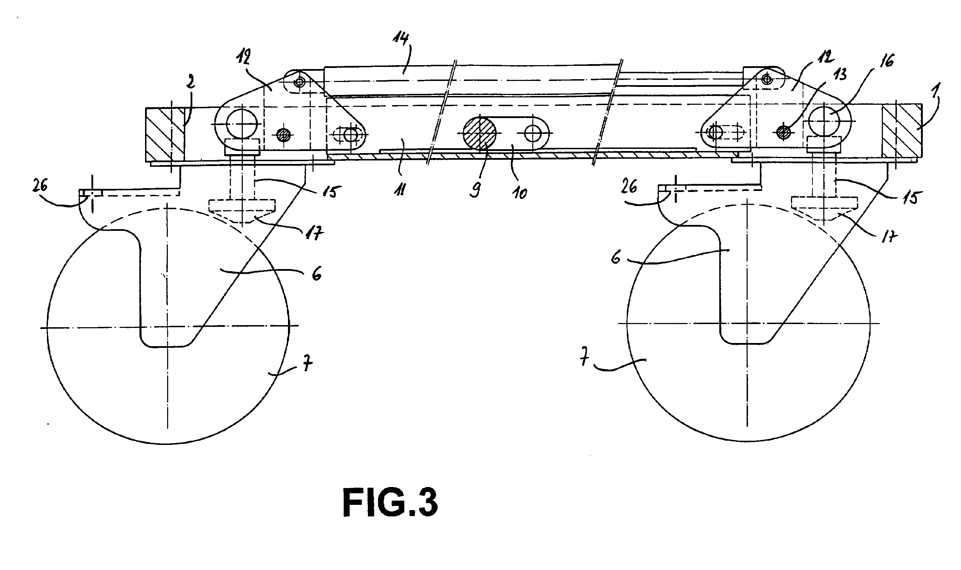

Aux deux extrémités de l'ouverture 2 des plaques 5 sont fixées sous le cadre 1. Elles font partie des moyens de pivotement à axe vertical de deux fourches d'essieu 6. Chaque fourche porte deux paliers libres pour le pivotement d'un axe d'essieu d'une roue 7. Les profils des roues 7 et des fourches d'essieu 6 sont visibles à la fig. 3. Dans cette figure les plans des roues sont orientés dans le sens longitudinal par rapport à la forme rectangulaire du cadre 1. On voit que le profil des fourches d'essieu est dissymétrique. A la fig. 1, les fourches d'essieu sont orientées dans la direction qui permet un déplacement du chariot dans le sens de la flèche C. Les moyens de pivotement 5 permettent la rotation des fourches d'essieu autour d'axes verticaux de sorte que si le chariot est déplacé soit au moyen d'un treuil soit à la main dans le sens de la flèche C les deux roues 7 du dispositif porteur se placent spontanément dans les positions parallèles visibles à la fig. 1.

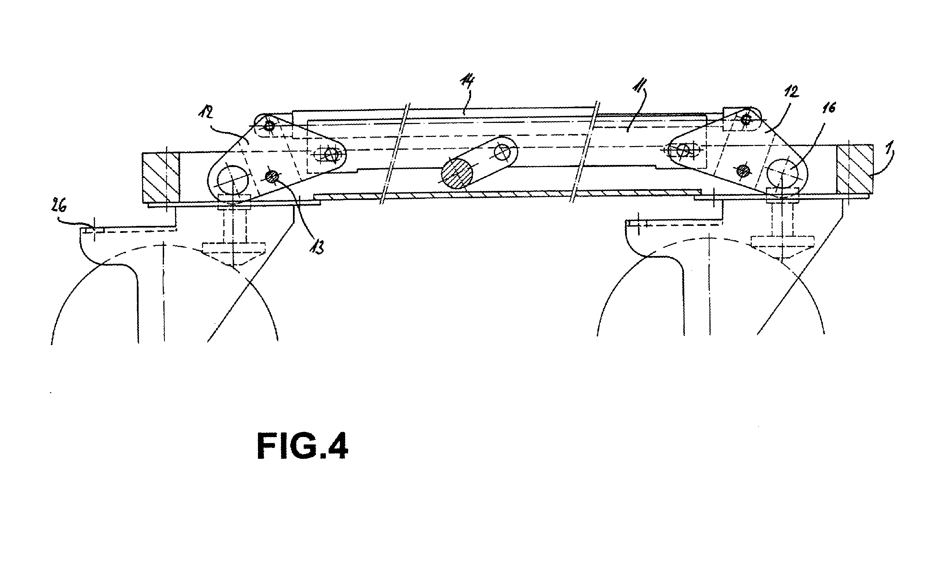

Les organes principaux de la commande de freinage sont représentés aux fig. 1, 3 et 4. L'ensemble est agencé de façon qu'en l'absence de toute manipulation, le freinage est effectif et qu'une action de l'utilisateur est nécessaire pour désengager les freins. A cet effet, un levier à main 8 est monté sur un axe rotatif 9 qui traverse le cadre 1 transversalement jusqu'à l'ouverture 2 et porte une biellette 10 s'étendant le long du bord de cette ouverture. La biellette 10 est accrochée à une barre de transmission 11 commandant deux culbuteurs triangulaires 12 qui pivotent sur des goupilles 13 engagées transversalement dans le cadre 1 au voisinage des extrémités de l'ouverture 2. Un ressort à gaz 14 est disposé entre les culbuteurs 12. Son cylindre et son piston sont respectivement reliés par leur extrémité libre au sommet supérieur de chacun des culbuteurs triangulaires 12, les dimensions étant choisies de manière que si les culbuteurs sont "à plat" comme à la fig. 3, alors le ressort est en état de compression. Lorsque le levier 8 est à l'état de repos, le ressort 14 agit par ses deux extrémités sur les culbuteurs 12 en les faisant pivoter autour des goupilles 13. Les tiges 15 sont actionnées par les cames 16 des culbuteurs et sont disposées dans la position de la fig. 4. Les tiges 15 se terminent par des têtes de freinage coniques 17 qui s'appuient contre la surface de roulement des roues 7. Le freinage est effectif et on note que cette action se produit quelle que soit l'orientation des fourches autour de leurs moyens de pivotement verticaux. Pour désactiver le freinage, l'utilisateur doit actionner le levier à main 8 et le maintenir en position d'actionnement. Des tiges de freinage 15, noyées dans les moyens de pivotement verticaux 5 des fourches 6, guidées coaxialement à ces moyens de pivotement sont alors repoussées par leurs ressorts de dégagement (non représentés) et comme on le voit à la fig. 3 se placent en regard mais à l'écart de la surface de roulement des roues 7. Dès que l'utilisateur relâche le levier 8, le freinage est réactivé par l'action du ressort 14. Des moyens de verrouillage (non représentés) peuvent être prévus pour retenir le levier à main 8 en position de travail et maintenir le mécanisme de freinage en position désactivée.

A la commande de freinage qui vient d'être décrite est associée une commande de blocage dont les éléments sont visibles aux figures 1, 5 et 6. Les fourches d'essieu 6 comportent un épaulement horizontal comme on le voit sur le profil des fig. 3 et 4. Lorsque les fourches sont orientées dans le sens du déplacement selon la flèche C (fig. 1), ces épaulements se trouvent sous les ouvertures 3. Comme indiqué plus haut, celles-ci sont des forures cylindriques à épaulement dans lesquelles sont engagées et guidées des tiges de blocage 18 (fig. 5 et 6) équipées de ressorts 19. Une barre de commande 20 munie de deux ouvertures allongées 21 est placée sur le cadre 1 de manière que les extrémités supérieures des tiges 18 traversent les ouvertures 21. Des plaquettes 22 vissées sur les tiges 18 assurent une liaison à jeu latéral entre les tiges 18 et la barre 20 qui est reliée elle-même par deux biellettes articulées 23 à deux axes parallèles 24 pivotant dans le cadre 1. Les biellettes 23 sont logées dans les creusures 4 et disposées parallèlement l'une à l'autre. Un des axes 24 porte à son extrémité un levier de commande à pédale 25, placé à côté du levier à main 8. Les figures 5 et 6 montrent les deux positions du mécanisme de blocage. A la figure 5 la barre 20 est maintenue en position surélevée par les biellettes 23 et les tiges de blocage 18 sont retenues par leurs plaquettes 22 au dessus de l'épaulement des fourches d'essieu de sorte que celles-ci sont libres. En revanche à la fig. 6 les biellettes 23 sont inclinées, la barre 20 est plaquée contre le cadre 1 et les extrémités inférieures des tiges 18 sont engagées dans des ouvertures 26 prévues dans l'épaulement des fourches 6. Celles-ci sont bloquées .

Le dispositif porteur selon l'invention peut en particulier très avantageusement être monté sur des chariots constituant des cellules d'assistance pour incendie, des cellules d'assistance médicales ou des cellules d'assistance à la protection civile ou militaire, chariots que l'on est souvent amenés à charger sur des véhicules, puis à décharger sur des terrains qui ne sont pas toujours plats. Dans de tels cas, il est important d'une part de pouvoir compter sur un dispositif de freinage du type de celui décrit et d'autre part de pouvoir bloquer la direction des roues, en particulier lorsque l'on charge ou décharge le chariot du véhicule en le déplaçant sur une rampe solidaire du véhicule.

On comprend également que le dispositif porteur peut être incorporé au châssis de chariots de différents types. Ainsi les deux autres roues du chariot pourraient être des roues à essieu non orientable, ou même le chariot pourrait être à trois roues seulement. On pourrait aussi prévoir une autre forme d'exécution du dispositif porteur avec deux cadres pourvus chacun de deux roues montées sur des fourches orientables et relier les uns aux autres les moyens de commande des deux paires de roues de sorte que la manoeuvre d'un seul levier de freinage ou de blocage ferait agir le mécanisme correspondant sur les quatre roues en même temps.

## Revendications

1. Dispositif porteur pour chariot à roues libres ayant au moins une paire de roues montées dans des fourches d'essieu orientables, caractérisé en ce qu'il comporte un cadre fixe (1) et, sur ce cadre, des dispositifs de pivotement (5) des fourches d'essieu (6), une commande de freinage (8, 10, 12, 15) des roues (7) et une commande de blocage (25, 20, 18, 26) de l'orientation des fourches d'essieu (6), les deux commandes étant manoeuvrables séparément.

2. Dispositif selon la revendication 1, caractérisé en ce que chaque fourche d'essieu (6) orientable est équipée d'une tige de freinage (15, 17) agissant dans l'axe de pivotement de la fourche, l'ensemble étant agencé pour appuyer en permanence verticalement les deux tiges de freinage (15, 17) associées aux roues (7) de la dite paire contre la surface de roulement de chacune des roues, la manoeuvre d'un levier (8) étant nécessaire pour désactiver le freinage.

3. Dispositif selon la revendication 2, caractérisé en ce que la commande de freinage comporte deux culbuteurs (12) triangulaires, pivotant sur le cadre (1) et actionnant chacun une des tiges de freinage (15, 17), une transmission à tringle (11), biellette (10) et axe de pivotement (9), entre le dit levier et les culbuteurs, et un organe à accumulation d'énergie (14) disposé entre les culbuteurs, actionnant les tiges de freinage (15, 17) contre la surface de roulement des roues, en position de freinage.

4. Dispositif selon la revendication 3, caractérisé en ce que l'organe à accumulation d'énergie (14) est un ressort à gaz.

5. Dispositif selon la revendication 1, caractérisé en ce que la commande de blocage des fourches comporte deux tiges de blocage (18) sollicitées par des ressorts (19), montées sur le même cadre (1) que la commande de freinage et capables de s'engager dans des ouvertures (26) prévues sur des épaulements des fourches (6), une tringle de liaison (20) guidée par les tiges de blocage et le cadre, et un ensemble à levier (25), axe de pivotement (24) et biellettes (23) relié à la dite tringle (20), pour soulever la tringle et entraîner les tiges afin de libérer les fourches, dans une position du levier, et laisser les tiges pénétrer dans les dites ouvertures et ramener la tringle contre le cadre, dans l'autre position du levier.

6. Dispositif selon la revendication 5, caractérisée en ce que les tiges de blocage (18) traversent des ouvertures allongées (21) ménagées dans la tringle (20) et agencées de manière que dans la position de libération des fourches, les tiges soient maintenues en position dégagée contre la force de leurs ressorts (19).

7. Dispositif selon la revendication 5 ou la revendication 6, caractérisé en ce que le levier (25) de la commande de blocage des fourches est un levier à pied.

8. Chariot à roues libres comprenant au moins un dispositif porteur avec une paire de roues montées dans des fourches d'essieu orientables, caractérisé en ce que le dispositif porteur est équipé en outre d'une commande de freinage agissant sur des tiges de freinage intégrées aux moyens de pivotement à axe vertical des fourches orientables.

9. Chariot à roues libres comprenant au moins un dispositif porteur avec une paire de roues montées dans des fourches d'essieu orientables, caractérisé en ce que le dispositif porteur est équipé en outre d'une commande de blocage capable de bloquer les fourches d'essieu dans des orientations parallèles et déterminées.
